# EUROPÄISCHE PATENTANMELDUNG

(11) **EP 1 403 749 A1**
(43) Veröffentlichungstag der Anmeldung: **31.03.2004**
(21) Anmeldenummer: 03021038.9
(22) Anmeldetag: 17.09.2003
(51) Int. Cl.: G05B 19/418, H04L 9/32

(54) **Automatisierungssystem sowie Verfahren zu dessen Betrieb**

(30) Priorität: 30.09.2002 DE 10245934
(71) Anmelder: SIEMENS AKTIENGESELLSCHAFT, 80333 München (DE)
(72) Erfinder: Herberth, Harald, 90522 Oberasbach (DE)

(57) **Zusammenfassung**

Es wird ein Automatisierungssystem (10) zur Steuerung und/oder Überwachung eines technischen Prozesses (13), das eine Anzahl von zum Austausch prozessrelevanter Daten (15) kommunikativ verbundener Steuer- und/oder Bedieneinheiten (11) umfasst, sowie ein korrespondierendes Verfahren zum Austausch von Daten (15) in einem solchen Automatisierungssystem (10) angegeben, wobei zur Verhinderung eines unberechtigten Zugriffs auf die Daten (15) der Austausch zumindest eines Identifizierungszertifikates (17) zwischen jeweils zwei Steuer- und/oder Bedieneinheiten (11) und eine als Verwaltungseinheit (14) fungierende Steuer- und/oder Bedieneinheit (11) zur Generierung oder Verwaltung des oder jedes Identifizierungszertifikates (17) und zu dessen Zuweisung an eine oder jede Steuer- und/oder Bedieneinheit (11) vorgesehen ist.

## Beschreibung

Die Erfindung betrifft ein Automatisierungssystem sowie ein Verfahren zu dessen Betrieb. Das Automatisierungssystem umfasst eine Anzahl Steuer- und/oder Bedieneinheiten, die über ein Kommunikationsnetz miteinander verbunden sind. Als Steuer- und/oder Bedieneinheiten kommen dabei Komponenten in Betracht, die unter Bezeichnungen wie speicherprogrammierbare Steuerungen (SPS), dezentrale Peripheriegeräte, Bedien- und Beobachtungsgeräte und dergleichen bekannt sind. Solche und ähnliche Komponenten werden im folgenden zusammenfassend als Automatisierungshardware bezeichnet und sind allgemein bekannt.

Zum Einsatz bei komplexen oder weitläufig verteilten Automatisierungsaufgaben ist es üblich, die einzelnen Komponenten der Automatisierungshardware kommunikativ miteinander zu verbinden. Dazu kommt als Kommunikationsnetz z.B. ein Feldbus (wie der sogenannte Profibus) oder dergleichen in Betracht. Über das Kommunikationsnetz sind Daten zwischen den einzelnen Komponenten der Automatisierungshardware übertragbar.

Bei den übertragenen Daten kann es sich z.B. um ein Steuerungsprogramm handeln, das in eine Komponente der Automatisierungshardware, z.B. eine speicherprogrammierbare Steuerung, geladen wird und im Betrieb deren Funktionalität bestimmt. Als zu einem Steuerungsprogramm gehörig werden dabei z.B. auch Parameter, wie z.B. anlagenspezifische Parameter verstanden. Nachdem das Automatisierungssystem insgesamt zur Steuerung und/oder Überwachung einer technischen Anlage oder eines technischen Prozesses vorgesehen ist, kann es sich bei den übertragenen Daten gleichfalls auch um Informationen aus dem oder für den technischen Prozess handeln. Die vorstehend genannten Daten werden im folgenden zusammenfassend als prozessrelevante Daten und die einzelnen Komponenten der Automatisierungshardware, soweit sie an das Kommunikationsnetz angeschlossen sind, als Kommunikationsteilnehmer bezeichnet.

Bei jedweder kommunikativen Verbindung zwischen zwei Kommunikationsteilnehmern ist zur Identifikation und Verwertung der übertragenen Daten die Verwendung eines Kommunikationsprotokolls, kurz Protokolls, üblich. Ein gebräuchliches Protokoll ist das TC-Protokoll (transport control protocol - TCP). Dieses Protokoll setzt auf dem sogenannten Internet-Protokoll (IP) auf. Im Zusammenhang mit Internet-Anwendungen hat sich infolgedessen für die gebräuchliche Kombination beider Protokolle die Kurzbezeichnung TCP/IP durchgesetzt. Die wesentlichen Dienstleistungen, die TCP für Anwendungsprozesses bereitstellt, sind Verbindungsorientierung, Reihenfolgengarantie, Verlustsicherung, Zeitüberwachung, Multiplexing, Flußsteuerung, transparenter Datentransport sowie gesicherter Verbindungsaufbau und -abbau. TCP ist der vierten Sicht des ISO/OSI-Schichtenmodells zuzuordnen und setzt direkt auf dem Internet-Protokoll auf. Wegen des vergleichsweise geringen Implementierungs- und Ressourcenaufwandes hat sich die TCP/IP Protokollfamilie in vielen Anwendungsbereichen durchgesetzt. Auf TCP/IP setzen aus den unterschiedlichen Internet-Anwendungen geläufige Protokolle wie FTP (file transfer protocol), HTTP (hypertext transfer protocol), SMTP (simple mail transfer protocol), etc. auf.

In einem Kommunikationsnetz übertragene Daten können grundsätzlich "abgehört" oder verändert werden. Um dies zu vermeiden wird im Internet bei besonderen Anwendungsfällen z.B. eine um Sicherungsfunktionen ergänzte Variante von HTTP mit der Bezeichnung S-HTTP oder HTTPS (secure http) verwendet. HTTPS basiert auf einem um SSL (secure socket layer) ergänzten TCP/IP. SSL selbst und dessen Verwendung ist allgemein bekannt. SSL sichert die Übertragung gegen unerwünschte Beeinflussung durch Austausch von Schlüsseln und/oder Zertifikaten um sicherzustellen, dass die Kommunikation genau zwischen zwei bestimmten Kommunikationsteilnehmern zustande kommt. Ist dies sichergestellt, werden die übertragenen Daten mittels der ausgetauschten Schlüssel auf Seiten des sendenden Kommunikationsteilnehmers verschlüsselt und auf Seiten des empfangenden Kommunikationsteilnehmers entschlüsselt.

Aus der US 2002/0046239 A1 ist ein Netzwerk von Kommunikationsteilnehmern bekannt, wobei einer der Kommunikationsteilnehmer eine Automatisierungseinrichtung und ein weiterer Kommunikationsteilnehmer ein entferntes Gerät sind. Die Kommunikationsteilnehmer sind über ein IP Netzwerk miteinander verbunden und tauschen Daten entsprechend einem vorgegeben Protokoll (Simple Object Access Protocol - SOAP) aus. Die Automatisierungseinrichtung umfasst zumindest eine Einheit, die Daten über das IP Netzwerk senden und empfangen kann. Damit können Informationen über die Automatisierungseinheit an das entfernte Gerät gesendet oder von diesem abgerufen werden. Art und Umfang der von der Einheit gebotenen Kommunikationsfunktionalität werden in einem speziellen Datensatz bereitgehalten, auf den das entfernte Gerät zugreifen kann und somit genau die von der Einheit bereit gestellten Dienste nutzen kann.

Der Nachteil einer solchen Zugriffsmöglichkeit auf eine Automatisierungseinrichtung von einem entfernten Gerät besteht darin, dass die übertragenen Daten verfälscht oder abgehört werden können. Selbst wenn eine Verschlüsselung der übertragenen Daten, z.B. mittels HTTPS, vorgesehen ist, besteht ein Nachteil der vorgeschlagenen Lösung darin, dass für die gesicherte Datenübertragung Zertifikate erforderlich sind, die von einer zentralen Stelle im Internet nur gegen Bezahlung generiert werden. Selbst wenn mittels eines solchen käuflich erworbenen Zertifikats die Datenübertragung zu dem entfernten Gerät abgesichert werden kann, kann diese Absicherung nicht auf eine eventuelle Vielzahl von verteilten Komponenten der Automatisierungseinrichtung ausgedehnt werden.

Der Erfindung liegt entsprechend die Aufgabe zugrunde, eine einfache, kostengünstige und dabei gegen unberechtigte Zugriffe gesicherte Kommunikationsmöglichkeit in einem Automatisierungssystem zu schaffen.

Diese Aufgabe wird erfindungsgemäß mit einem Automatisierungssystem mit den Merkmalen des Anspruchs 1 sowie mit einem Verfahren zum Austausch von Daten in einem Automatisierungssystem mit den Merkmalen des Anspruchs 5 gelöst.

Dazu ist bei einem Automatisierungssystem zur Steuerung und/oder Überwachung eines technischen Prozesses, das eine Anzahl von zum Austausch prozessrelevanter Daten kommunikativ verbundener Steuer- und/oder Bedieneinheiten umfasst, zur Verhinderung eines unberechtigten Zugriffs auf die Daten der Austausch zumindest eines Identifizierungszertifikates zwischen jeweils zwei Steuer- und/oder Bedieneinheiten und eine als Verwaltungseinheit fungierende Steuer- und/oder Bedieneinheit zur Generierung oder Verwaltung des oder jedes Identifizierungszertifikates und zu dessen Zuweisung an eine oder jede Steuer- und/oder Bedieneinheit vorgesehen.

Entsprechend wird bei einem Verfahren zum sicheren Austausch von Daten in einem zur Steuerung und/oder Überwachung eines technischen Prozesses vorgesehenen Automatisierungssystem, das eine Anzahl von zum Austausch prozessrelevanter Daten kommunikativ verbundener Steuer- und/oder Bedieneinheiten umfasst, ein unberechtigter Zugriff auf die Daten durch Austausch zumindest eines Identifizierungszertifikat zwischen jeweils zwei Steuer- und/oder Bedieneinheiten verhindert, wobei das oder jedes Identifizierungszertifikat von einer als Verwaltungseinheit fungierenden Steuer- und/oder Bedieneinheit generiert oder verwaltet und unter deren Kontrolle der oder jeder Steuer- und/oder Bedieneinheit zugewiesen wird.

Die Erfindung geht dabei von der Erkenntnis aus, dass bei heutigen Automatisierungsvorhaben üblicherweise eine verteilte Anordnung der einzelnen Komponenten der Automatisierungshardware und damit eine kommunikative Verbindung zwischen diesen Komponenten erforderlich ist. Mit der Ausdehnung des die kommunikative Verbindung ermöglichenden Kommunikationsnetzes steigt die Gefahr eines Angriffs auf die jeweils übertragenen Daten. Nachdem die Daten Steuerinformationen für den jeweiligen technischen Prozess umfassen kann eine Verfälschung der Daten durch einen Angreifer zu ansonsten nicht vorgesehenen Zuständen im technischen Prozess führen. Solche Zustände können sowohl zu einer Gefährdung der Maschinen und Betriebseinrichtungen wie auch des Bedienpersonals und im Falle von z.B. chemischen Anlagen sogar zu einer Gefährdung der Umwelt und der benachbarten Bevölkerung führen. Daneben können verfälschte Daten die Materialwirtschaft für einen technischen Prozess negativ beeinflussen, wenn z.B. Bestellungen von ver- oder bearbeiteten Materialien zu früh oder zu spät ausgelöst werden. Ferner enthalten von einem Angreifer ausgespähte Daten z.B. Rezepturen oder sonstige vertrauliche Daten. Schließlich enthalten die Daten üblicherweise auch statistische Informationen zur Auslastung des Prozesses, zu dessen Effizienz und dergleichen, die ebenfalls nicht allgemein bekannt sind.

Die Sicherung der übertragenen Daten gewinnt entsprechend zunehmend Bedeutung. Gleichzeitig wachsen die Kommunikationsnetze immer stärker zusammen, so dass auch im Automatisierungsbereich Standardprotokolle Anwendung finden. Mit der Öffnung des Automatisierungsbereichs für Standardprotokolle geht aber auch ein Verlust an Sicherheit in den bisher weitgehend autarken Kommunikationsnetzen von Automatisierungssystemen einher. Denn damit können handelsübliche Geräte, die zur Verarbeitung solcher Standardprotokolle geeignet sind, an das Kommunikationsnetz des Automatisierungssystems angeschlossen und zum Angriff auf die übertragenen Daten verwendet werden.

Zur Sicherung der übertragenen Daten können grundsätzlich die von den Standardprotokollen bekannten Sicherungsmethoden wie z.B. Authentifizierung und Verschlüsselung angewandt werden. Zur Authentifizierung werden dabei z.B. bei einer Kommunikation mit SSL Identifizierungszertifikate verwendet, die jedoch käuflich erworben werden müssen. Dann können die Identifizierungszertifikate zur Einleitung einer sicheren Kommunikation mit jedem anderen Kommunikationsteilnehmer im selben Kommunikationsnetz, z.B. dem Internet, verwendet werden. Bei Automatisierungsaufgaben ist es demgegenüber ausreichend, wenn sichergestellt werden kann, dass die in einem Automatisierungssystem vorhandenen Kommunikationsteilnehmer nur mit anderen Kommunikationsteilnehmern des selben Automatisierungssystems kommunizieren. Insofern ist eine nur das Automatisierungssystem selbst erfassende Authentifizierung ausreichend. Ein als Verwaltungseinheit fungierender Kommunikationsteilnehmer des Automatisierungssystems kann daher zur Verwaltung und/oder Generierung der Identifizierungszertifikate verwendet werden. Die auf das Automatisierungssystem beschränkte Verwendbarkeit und Gültigkeit der Identifizierungszertifikate fällt dabei nicht negativ in Betracht. Im Gegenteil ergibt sich sogar aus der Tatsache, dass die Verwaltungseinheit die Identifizierungszertifikate selbst generieren kann, eine Flexibilität, die ein dynamisches Zuweisen und Zurückziehen von Identifizierungszertifikaten - angepasst an die Kommunikationssituation im Automatisierungssystem - ermöglicht.

Der Vorteil der Erfindung besteht damit darin, dass bei einem derartigen Automatisierungssystem oder bei einem derartigen Verfahren zur Übertragung von Daten in einem Automatisierungssystem eine Kommunikation nur zwischen solchen Kommunikationsteilnehmern möglich ist, die über die notwendigen Identifizierungszertifikate verfügen. Ein Angreifer, dem die entsprechenden Identifizierungszertifikate fehlen, kann - selbst wenn er Zugriff auf das Kommunikationsnetz erhält - die übertragenen Daten weder verfälschen noch aus den übertragenen Daten verwertbare Informationen ableiten.

Vorteilhafte Ausgestaltungen der Erfindung sind Gegenstand der Unteransprüche.

Vorteilhaft erfolgt anhand des Identifizierungszertifikates eine Generierung eines Schlüssels zur Sicherung der Übertragung der prozessrelevanten Daten. Damit ist direkt nach einem Austausch und geeigneter Verifikation des Identifizierungszertifikates eine verschlüsselte Datenübertragung möglich, ohne dass etwa noch Daten hinsichtlich des Schlüssels und dessen Generierung übertragen werden müssten, die ggf. abgehört und unredlich verwendet werden könnten.

Bevorzugt erfolgt der Austausch der Daten mittels eines automatisierungsspezifischen Applikationsprotokolls. Ein solches Applikationsprotokoll ist auf die Besonderheiten der Automatisierung abgestellt und ermöglicht eine besonders effiziente Übertragung gerade solcher Daten, wie sie bei der Steuerung und/oder Überwachung technischer Prozesse zu übertragen sind.

Wenn die Verwaltungseinheit zur Bearbeitung und/oder Installation von Ablaufprogrammen auf den anderen Steuer- und/oder Bedieneinheiten ausgelegt ist, kann auch eine Übertragung solcher Daten, nämlich der Ablaufprogramme, in abgesicherter Form erfolgen. Dies ist deswegen vorteilhaft, weil gerade die Ablaufprogramme das in ein Automatisierungssystem eingebrachte technische Know-how in komprimierter Form enthalten. Alternativ kann an die Stelle der Verwaltungseinheit auch ein Programmiergerät treten, das zur Bearbeitung und/oder Installation von Ablaufprogrammen auf den anderen Steuer- und/oder Bedieneinheiten ausgelegt ist. Schließlich können Verwaltungseinheit und Programmiergerät auch gleichzeitig nebeneinander in einem Automatisierungssystem vorhanden sein. Einerseits können dann z.B. sowohl seitens des Programmiergerätes als auch seitens der Verwaltungseinheit Ablaufprogramme auf den anderen Steuer- und/oder Bedieneinheiten beeinflusst werden. Andererseits können z.B. auch Ablaufprogramme vom Programmiergerät zur Verwaltungseinheit und von dort zu jeweils einem der anderen Steuer- und/oder Bedieneinheiten übertragen werden. Die Verwaltungseinheit (oder ggf. das Programmiergerät) fungiert dann als sogenanntes Engineering-Werkzeug mit einer in Software realisierten Engineering-Umgebung, die eine Installation oder Modifikation der Ablaufprogramme erlaubt. Gemäß einer weiteren Alternative können die Funktionalität von Verwaltungseinheit und Programmiergerät auch in einem Gerät zusammengefasst sein.

Die von der Verwaltungseinheit verwalteten Identifizierungszertifikate werden dort nach Möglichkeit schon während der Projektierung des Automatisierungssystems hinterlegt. Alternativ sind Mechanismen vorgesehen, mit denen die Verwaltungseinheit anhand hinterlegter Daten die Identifizierungszertifikate generiert. Solche Zertifikate werden auch als "selfsigned" Zertifikate bezeichnet. Sie haben zwar nur in einem begrenzten Umfeld Gültigkeit. Dieses begrenzte Umfeld ist jedoch für Automatisierungsanwendungen ausreichend.

Ein zentraler Vorteil der Erfindung und ihrer Ausgestaltungen besteht darin, dass vor allem eine schnelle, dynamische Anpassung der zulässigen Kommunikationswege mittels eines Austausches von Identifizierungszertifikaten möglich ist. Eine derartige Anpassung ermöglicht z.B. im Wartungsfall den Zugriff auf das Automatisierungssystem mit zusätzlichen Geräten, wie z.B. einem Programmiergerät. Ein Programmiergerät wird zur Wartung oder Diagnose üblicherweise nur zeitweise an das Kommunikationsnetz des Automatisierungssystems angeschlossen. Mit entsprechenden Identifizierungszertifikaten kann das Programmiergerät eine sichere Kommunikation mit einzelnen oder allen Steuer- und/oder Bedieneinheiten des Automatisierungssystems aufnehmen. Die Kommunikation mit dem Programmiergerät kann dabei auch über das Internet erfolgen. Damit wird bei gesicherter Datenübertragung eine Ferndiagnose und Fernwartung des Automatisierungssystems möglich. Für solche Anwendungsfälle verfügt zumindest eine der Steuerund/oder Bedieneinheiten über eine Gruppe von Zertifikaten oder ein spezielles Zertifikat, das zur Authentifizierung z.B. eines solchen Programmiergerätes verwendet wird. Ein im Kommunikationsnetz ebenfalls üblicherweise nur zeitweise präsenter Angreifer wird wirksam von jeder Kommunikation ausgeschlossen.

Die Absicherung der Kommunikation kann dabei sogar gestaffelt erfolgen. So kann für einzelne Steuer- oder Bedieneinheiten eine "einseitig sichere" Verbindung vorgesehen sein, die dazu führt, dass eingehende prozessrelevante Daten, die z.B. eine Beeinflussung von Aktoren im technischen Prozess bewirken, nicht abgehört und verändert werden können. Bei Steuer- oder Bedieneinheiten, die ausschließlich Daten aus dem Prozess aufnehmen, ist ebenfalls eine einseitig sichere Verbindung ausreichend, die dann bewirkt, dass die ermittelten Daten nicht abgehört oder zumindest nicht verändert werden können. Bei weiteren Steuer- und Bedieneinheiten kann aufgrund der Art der übertragenen Daten eine "beidseitig sichere" Verbindung erforderlich sein. Die Art der Sicherung der Datenübertragung kann für jede Steuer- oder Bedieneinheit individuell und sogar noch zeitlich veränderlich vorgegeben werden.

Das Automatisierungssystem kann darüber hinaus insgesamt so ausgelegt sein, dass Zugriffsversuche eines Angreifers erkannt werden und ein Alarm ausgelöst wird. Zusätzlich oder alternativ kann das Automatisierungssystem bei einem erkannten Zugriffsversuch in einen sicheren Zustand überführt werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: ein Automatisierungssystem mit einer Anzahl Steuer- und/oder Bedieneinheiten zur Steuerung und/oder Überwachung eines technischen Prozesses,
- FIG 2: einen Austausch von Daten zwischen zwei kommunikativ verbundenen Steuer- und/oder Bedieneinheiten,
- FIG 3: einen unberechtigten Zugriff eines Angreifers auf zwischen zwei Steuer- und/oder Bedieneinheiten übertragene Daten,
- FIG 4: einen Austausch von Identifizierungszertifikaten zwischen zwei Steuer- und/oder Bedieneinheiten,
- FIG 5: zulässige Kommunikationswege in einem Automatisierungssystem und einen davon ausgeschlossenen Angreifer sowie
- FIG 6: einen entfernten Zugriff auf das Automatisierungssystem mittels eines Programmiergerätes über einen zulässigen Kommunikationsweg.

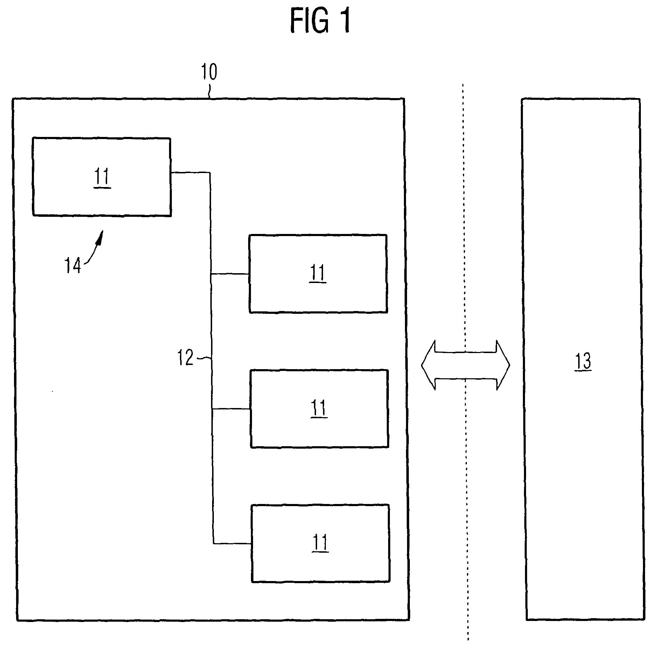

FIG 1 zeigt ein Automatisierungssystem 10 mit einer Anzahl von Steuer- und/oder Bedieneinheiten 11 die untereinander durch ein Kommunikationsnetz 12 kommunikativ verbunden sind. Das Automatisierungssystem 10 ist zur Steuerung und/oder Überwachung eines nur schematisch dargestellten technischen Prozesses 13 vorgesehen. Unter den Steuer- und/oder Bedieneinheiten 11 fungiert zumindest eine als Verwaltungseinheit 14.

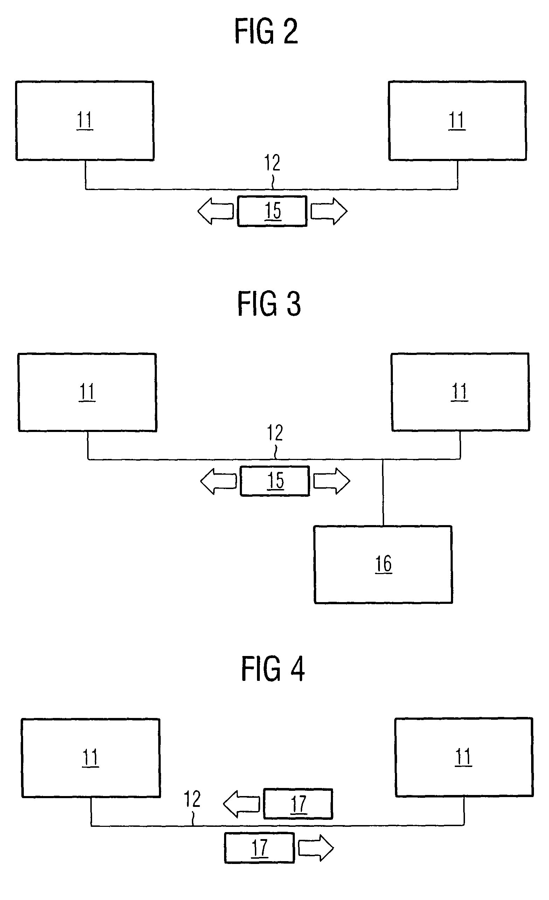

FIG 2 zeigt schematisch einen Austausch von Daten 15, der grundsätzlich zwischen jeder Steuer- und/oder Bedieneinheit 11 und jeder anderen Steuer- und/oder Bedieneinheiten 11 stattfindet. Die übertragenen Daten 15 sind prozessrelevante Daten 15, also z.B. ein Steuerprogramm oder Teile desselben unter dessen Kontrolle einzelne Steuer- und/oder Bedieneinheiten den technischen Prozess 13 oder Teile desselben als Teilprozesse überwachen und/oder steuern. Ferner gehören zu den prozessrelevanten Daten 15 Parameter zur Konfiguration des technischen Prozesses 13 und selbstverständlich die eigentlichen Prozessdaten, nämlich Zustände des technischen Prozesses 13 oder Steuerinformationen zur Beeinflussung des technischen Prozesses 13.

FIG 3 zeigt einen unberechtigten Zugriff eines Angreifers 16 auf die Daten 15. Der unberechtigte Zugriff erfolgt dabei durch Anschließen eines geeigneten Kommunikationsteilnehmers an das Kommunikationsnetz 12. Der Angreifer 16 kann mit der Möglichkeit des Zugriffs auf das Kommunikationsnetz 12, wofür lediglich eine Eignung zu Umsetzung des verwendeten Protokolls erforderlich ist, die übertragenen Daten 15 abhören oder verfälschen. Nur wenn die Daten 15 verschlüsselt sind, kann ein solcher unberechtigter Zugriff vermieden werden.

Damit zwei Kommunikationsteilnehmer, also z.B. zwei Steuerund/oder Bedieneinheiten 11, Daten 15 verschlüsselt austauschen können, muss vorher ein Verschlüsselungsverfahren und der verwendete Schlüssel selbst ausgehandelt werden. Wenn eine solche Abstimmung irrtümlich mit einem Angreifer 16 erfolgt oder durch einen Angreifer selbst veranlasst wird, erfolgt zwar ein verschlüsselter Transfer der Daten 15, diese kann der Angreifer jedoch ohne weiteres lesen und modifizieren, da er ja selbst in Besitz des Schlüssels ist.

Die Erfindung basiert darauf, dass innerhalb des Kommunikationsnetzes 12 sämtliche Kommunikationsteilnehmer bekannt sind, und nur zwischen diesen bekannten Kommunikationsteilnehmern ein Datentransfer erfolgt.

FIG 4 zeigt exemplarisch für jede mögliche Kommunikation im Kommunikationsnetz 12 den Austausch eines Identifizierungszertifikates 17 zwischen zwei Steuer- und/oder Bedieneinheiten 11. Die zwei Steuer- und/oder Bedieneinheiten 11, die miteinander ein gültiges Identifizierungszertifikat 17 ausgetauscht haben, können danach verschlüsselte Daten 15 austauschen, auf die ein Angreifer 16 keinen Zugriff hat. Durch die Übermittlung eines Identifizierungszertifikates 17 an eine andere Steuer- und/oder Bedieneinheit 11 oder die Verwaltungseinheit 14 als eine der Steuer- und/oder Bedieneinheiten 11 identifiziert sich der übermittelnde Kommunikationsteilnehmer und wird damit als berechtigter Kommunikationsteilnehmer im Automatisierungssystem 10 bekannt.

Das oder jedes Identifizierungszertifikat 17 wird der jeweiligen Steuer- und/oder Bedieneinheiten 11 entweder während der Projektierung oder im Betrieb des Automatisierungssystems 10 von der Verwaltungseinheit 14 zugewiesen. Die Zuweisung eines Identifizierungszertifikates 17 erfolgt in einem separaten Kommunikationsvorgang zwischen der Verwaltungseinheit 14 und der jeweiligen Steuer- und/oder Bedieneinheit 11 und entspricht damit der in FIG 3 dargestellten Kommunikation.

Eine solche zentrale Vergabe des oder jedes Identifizierungszertifikates 17 ermöglicht eine exakte Festlegung der möglichen Kommunikationswege im jeweiligen Kommunikationsnetz 12. Nachdem hardwaremäßig jede Steuer- und/oder Bedieneinheit 11 an das Kommunikationsnetz 12 angeschlossen ist, kann theoretisch jede Steuer- und/oder Bedieneinheit 11 mit jeder andern Steuer- und/oder Bedieneinheit 11 kommunizieren. Wird dagegen bei einer Kommunikation von beiden Teilnehmern vom jeweils anderen Teilnehmer ein gültiges Identifizierungszertifikat 17 vorausgesetzt, können nur noch solche Teilnehmer, nämlich die jeweiligen Steuer- und/oder Bedieneinheit 11, miteinander kommunizieren, die über ein gültiges Identifizierungszertifikat 17 verfügen.

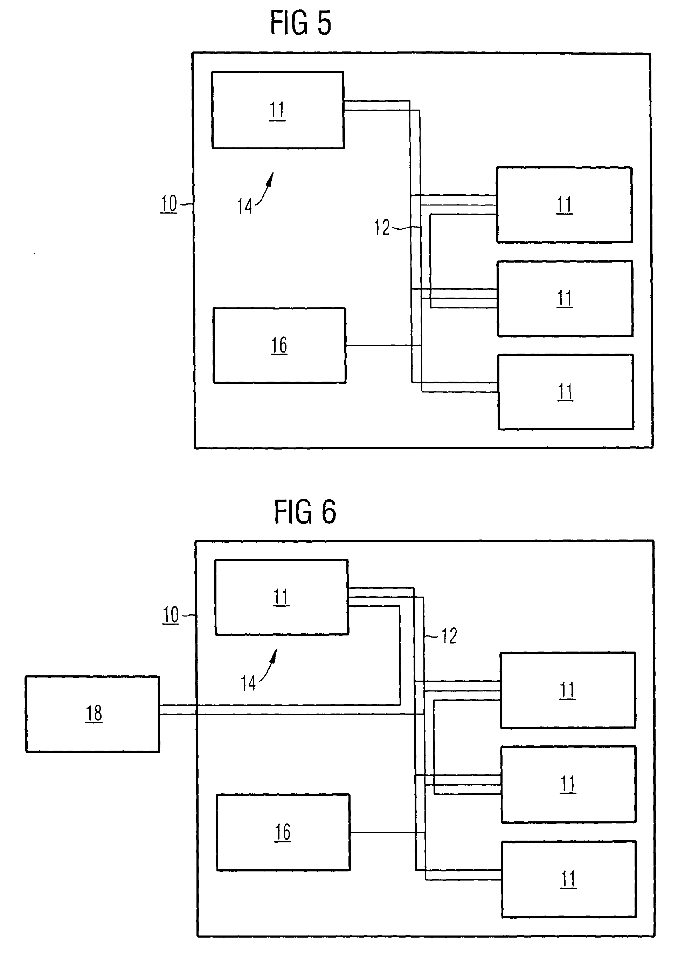

FIG 5 zeigt entsprechend nochmals die Darstellung des Automatisierungssystems gemäß FIG 1. Zusätzlich zur Darstellung in FIG 1 sind neben den theoretisch möglichen Kommunikationswegen, nämlich den Verbindungen des Kommunikationsnetzes 12, die tatsächlich nutzbaren Kommunikationswege, die durch Doppelstriche kenntlich gemacht sind, eingetragen. Danach kann die Verwaltungseinheit 14 mit jeder Steuer- und/oder Bedieneinheit 11 kommunizieren. Von den Steuer- und/oder Bedieneinheiten 11 selbst können nur zwei direkt miteinander kommunizieren. Ein Angreifer 16 kann dagegen weder mit einer der Steuer- und/oder Bedieneinheiten 11 noch mit der Verwaltungseinheit 14 kommunizieren.

Die auf der Vergabe der Identifizierungszertifikate 17 basierende Festlegung "zulässiger" Kommunikationswege im Kommunikationsnetz 12 ist nicht statisch sondern kann von der Verwaltungseinheit 14 bedarfsweise durch Zuteilung neuer oder weiterer Identifizierungszertifikate 17 oder durch Entzug zugewiesener Identifizierungszertifikate 17 beeinflusst werden. Daneben kann ein zugeteiltes Identifizierungszertifikat 17 auch nach einer festgelegten oder festlegbaren Zeitspanne auslaufen, so dass für die betroffene Steuer- und/oder Bedieneinheiten 11 eine erneute Zuteilung eines Identifizierungszertifikat 17 erforderlich ist, damit diese wieder an der Kommunikation teilnehmen kann.

FIG 6 zeigt einen Anwendungsfall für modifizierte oder modifizierbare zulässige Kommunikationswege am Beispiel eines nicht dauerhaft an das Kommunikationsnetz 12 angeschlossenen Kommunikationsteilnehmers, wie z.B. einem Programmiergerät 18. Das Programmiergerät 18 wird zum Zwecke der Wartung oder Diagnose des Automatisierungssystems 10 an das Kommunikationsnetz 12 angeschlossen. Nachdem Wartung und Diagnose eines Automatisierungssystems 10 von Zeit zu Zeit erforderlich sind, ist dies bei der Projektierung des Automatisierungssystems 10 vorgesehen worden und zumindest die Verwaltungseinheit 14 ist in der Lage mit dem Programmiergerät 18 ein gültiges Identifizierungszertifikat 17 auszutauschen. Zu diesem Zweck kann bereits bei der Projektierung in der Verwaltungseinheit 14 ein Identifizierungszertifikat 17 hinterlegt werden, das eine spätere Kommunikation mit genau einem bestimmten Programmiergerät 18 ermöglicht. Alternativ können auch ein oder mehrere Identifizierungszertifikate 17 hinterlegt sein, die eine Kommunikation mit einer jeweils einem Programmiergerät 18 aus einer Gruppe von Programmiergeräten 18, etwa sämtlicher Programmiergeräte 18 eines Dienstleistungsanbieters im Automatisierungsumfeld, ermöglichen. Wiederum ist einem Angreifer 16 - trotz der Veränderlichkeit der zulässigen Kommunikationswege - der Zugriff auf die übertragenen Daten 15 (FIG 3) verwehrt. Der Anschluss des Programmiergerätes 18 oder auch jedes anderen berechtigt hinzukommenden Kommunikationsteilnehmers kann dabei z.B. über das Internet erfolgen. Dies ermöglicht auch eine Fernwartung oder Ferndiagnose des Automatisierungssystems 10 ohne dass sich damit Angriffsmöglichkeiten für unredliche Dritte ergäben.

Zusammenfassend betrifft die Erfindung somit ein Automatisierungssystem 10 zur Steuerung und/oder Überwachung eines technischen Prozesses 13, das eine Anzahl von zum Austausch prozessrelevanter Daten 15 kommunikativ verbundener Steuerund/oder Bedieneinheiten 11 umfasst, sowie ein korrespondierendes Verfahren zum Austausch von Daten 15 in einem solchen Automatisierungssystem 10, wobei zur Verhinderung eines unberechtigten Zugriffs auf die Daten 15 der Austausch zumindest eines Identifizierungszertifikates 17 zwischen jeweils zwei Steuer- und/oder Bedieneinheiten 11 und eine als Verwaltungseinheit 14 fungierende Steuer- und/oder Bedieneinheit 11 zur Generierung oder Verwaltung des oder jedes Identifizierungszertifikates 17 und zu dessen Zuweisung an eine oder jede Steuer- und/oder Bedieneinheit 11 vorgesehen ist.

## Patentansprüche

1. Automatisierungssystem (10) zur Steuerung und/oder Überwachung eines technischen Prozesses (13), das eine Anzahl von zum Austausch prozessrelevanter Daten (15) kommunikativ verbundener Steuer- und/oder Bedieneinheiten (11) umfasst,
wobei zur Verhinderung eines unberechtigten Zugriffs auf die Daten (15) der Austausch zumindest eines Identifizierungszertifikates (17) zwischen jeweils zwei Steuer- und/oder Bedieneinheiten (11) und eine als Verwaltungseinheit (14) fungierende Steuer- und/oder Bedieneinheit (11) zur Generierung oder Verwaltung des oder jedes Identifizierungszertifikates (17) und zu dessen Zuweisung an eine oder jede Steuerund/oder Bedieneinheit (11) vorgesehen ist.

2. Automatisierungssystem nach Anspruch 1,
wobei anhand des Identifizierungszertifikates (17) eine Generierung eines Schlüssels zur Sicherung der Daten (15) erfolgt.

3. Automatisierungssystem nach Anspruch 1 oder 2,
wobei der Austausch der Daten (15) mittels eines automatisierungsspezifischen Applikationsprotokolls erfolgt.

4. Automatisierungssystem nach einem der Ansprüche 1 bis 3,
wobei die Verwaltungseinheit (14) zur Bearbeitung und/oder Installation von Ablaufprogrammen auf den anderen Steuerund/oder Bedieneinheiten (11) ausgelegt ist.

5. Verfahren zum sicheren Austausch von Daten (15) in einem zur Steuerung und/oder Überwachung eines technischen Prozesses (13) vorgesehenen Automatisierungssystem (10), das eine Anzahl von zum Austausch prozessrelevanter Daten (15) kommunikativ verbundener Steuer- und/oder Bedieneinheiten (11) umfasst, wobei ein unberechtigter Zugriff auf die Daten (15) durch Austausch zumindest eines Identifizierungszertifikat (17) zwischen jeweils zwei Steuer- und/oder Bedieneinheiten (11) verhindert wird und das oder jedes Identifizierungszertifikat (17) von einer als Verwaltungseinheit (14) fungierenden Steuer- und/oder Bedieneinheit (11) generiert oder verwaltet und unter deren Kontrolle der oder jeder Steuerund/oder Bedieneinheit (11) zugewiesen wird.

6. Verfahren nach Anspruch 5, wobei anhand des Identifizierungszertifikates (17) ein Schlüssel zur Sicherung der Daten (15) generiert wird.

7. Verfahren nach Anspruch 5 oder 6, wobei der Austausch der Daten (15) mittels eines automatisierungsspezifischen Applikationsprotokolls erfolgt.

8. Verfahren nach einem der Ansprüche 5 bis 7, wobei eine Bearbeitung und/oder Installation von Ablaufprogrammen auf den anderen Steuer- und/oder Bedieneinheiten (11) mittels der Verwaltungseinheit (14) erfolgt.
